# DEMANDE DE BREVET EUROPEEN

(11) **EP 2 065 944 A1**
(43) Date de publication de la demande: **03.06.2009**
(21) Numéro de dépôt: 08300284.0
(22) Date de dépôt: 27.11.2008
(51) Int. Cl.: H01L 31/048, H01L 31/042, E04D 13/18

(54) **Dispositif support de panneaux de couverture de toiture**

(30) Priorité: 27.11.2007 FR 0759348
(71) Demandeur: Graphisol (Société à Responsabilité Limitée à Associé unique), 11800 Laure-Minervois (FR)
(72) Inventeur: Canet, Patrice, 11570, PALAJA (FR); Delpeyrou, José, 11000, CARCASSONNE (FR)
(74) Mandataire: Rhein, Alain

(57) **Abrégé**

La présente invention concerne un dispositif (1) support d'au moins un panneau (2) de couverture de toiture et une telle toiture. Ce dispositif (1) est constitué d'au moins un rail (3) pourvu en partie haute (4) de moyens (5) supports dudit panneau (2) et en partie basse (6) de moyens (7) de fixation à au moins un élément (8) de ladite toiture, ledit rail (3) comprenant encore des moyens (20) de blocage d'un film (21) de protection de ladite toiture, lesdits moyens de blocage (20) se situant supérieurement auxdits moyens de fixation (7) de sorte que ces derniers soient couverts par ledit film (21), caractérisé par le fait que lesdits moyens de blocage (20) comprennent au moins une partie mâle (22) de forme complémentaire avec au moins une partie femelle (23) de manière à coopérer par emboîtement, bloquant une extrémité dudit film (21).

## Description

La présente invention entre dans le domaine de la construction, plus particulièrement dans la réalisation de toiture et de couverture de toit.

L'invention concerne plus particulièrement un dispositif de fixation à une charpente d'élément de toiture.

Un tel dispositif de fixation trouvera une application préférentielle mais non limitative en tant que support de panneau de captation solaire, notamment un panneau constitué de cellules photovoltaïques.

De manière connue, un support de fixation de panneau de couverture de toit, à savoir un panneau photovoltaïque dans le cadre préférentiel de l'invention, se présente sous la forme d'un rail solidarisé à la charpente. Pour ce faire, ce rail comprend en partie inférieure des moyens de fixation aux liteaux (ou contre-lattes) et en partie supérieure des organes de réception dudit panneau.

Les moyens de fixation se présentent généralement sous la forme d'orifices ou d'alésage conformés de manière à être traversés par une vis auto foreuse ou vis, cheville, clou ou analogue venant s'enfoncer dans le liteau.

Une telle technique de fixation pose des problèmes d'étanchéité. En effet, selon les normes en vigueur pour la réalisation d'une toiture, il est nécessaire de disposer un écran de sous-toiture étanche à l'eau et hautement perméable à la vapeur d'eau entre les chevrons de la charpente et les liteaux. Lors de la fixation d'un rail comme évoqué précédemment, le film est transpercé et, par conséquent, peut provoquer des fuites.

De plus, les différents lés de l'écran sont positionnés parallèlement à la gouttière avec un recouvrement donné selon la pente de la toiture, comme lors de la pose de tuiles, en escalier. Afin d'éviter les infiltrations d'eau sous les panneaux, l'extrémité inférieure d'un panneau doit donc venir recouvrir l'extrémité supérieure du panneau situé en dessous. Dans cette configuration, afin d'avoir un ruissellement sur les panneaux sans problème d'étanchéité, il est nécessaire d'en surélever une extrémité. Outre dénaturer l'aspect esthétique de la toiture, il s'agit d'une opération supplémentaire minutieuse et fastidieuse avec une pente minimale de pose à respecter.

L'invention a pour but de pallier les inconvénients de l'état de la technique en proposant un dispositif de réception de panneau de toiture directement fixé à la charpente et assurant une étanchéité optimale.

Pour ce faire, un tel dispositif comprend un rail destiné à supporter le panneau de toiture et à recevoir un film de protection formant un écran de sous toiture. Ainsi, il n'est plus nécessaire de disposer un film d'étanchéité sur les chevrons et sous le rail.

De plus, on s'affranchit de l'opération de pose des liteaux et contre-lattes, générant des économies de matériaux, de temps et de main d'oeuvre.

Enfin, un autre avantage réside dans le positionnement des lés selon une seule pente, sans chevauchement ou recouvrement ce qui diminue considérablement la pente du toit. Ainsi, la pente du toit peut aller de 2%, soit la pente minimale autorisant l'écoulement ou le ruissellement des eaux, jusqu'à être totalement verticale, le long d'une paroi, d'un mur ou en devanture d'une façade.

Selon les caractéristiques principales, la présente invention a pour objet un dispositif support de panneau de couverture de toiture, constitué d'au moins un rail pourvu en partie haute de moyens supports dudit panneau et en partie basse de moyens de fixation à au moins un élément de ladite toiture, ledit rail comprenant encore des moyens de blocage d'un film de protection de ladite toiture, lesdits moyens de blocage se situant supérieurement auxdits moyens de fixation de sorte que ces derniers soient couverts par ledit film, caractérisé par le fait que lesdits moyens de blocage comprennent au moins une partie mâle de forme complémentaire avec au moins une partie femelle de manière à coopérer par emboîtement, bloquant une extrémité dudit film.

Cette fixation particulière des lés par emboîtement, sans les perforer, assure un maintien efficace et régulier par une pression répartie tout le long et de chaque côté de l'écran de sous-toiture.

L'invention concerne aussi une toiture comprenant une charpente et, fixé sur un au moins un élément de ladite charpente au moins un dispositif selon l'invention servant de support à au moins un panneau de couverture de toit.

D'autres caractéristiques et avantages de l'invention ressortiront de la description détaillée qui va suivre des modes de réalisation non limitatifs de l'invention, en référence aux figures annexées dans lesquelles :
- la figure 1 représente un assemblage de panneaux solaires au moyen du dispositif selon l'invention ;
- la figure 2 représente un détail de la figure 1 ;
- la figure 3 est une vue en coupe éclatée du dispositif selon l'invention fixé à une charpente ;
- la figure 4 est une vue en coupe d'un détail d'un tel dispositif ;
- les figures 5A, 5B et 5C représentent les étapes de pose d'un film sur une toiture au moyen du dispositif selon un autre mode de réalisation ; et
- la figure 6 représente une vue en coupe d'un détail du mode de réalisation des figures 5A, 5B et 5C.

La présente invention concerne un dispositif 1 support d'au moins un panneau 2 de couverture de toiture.

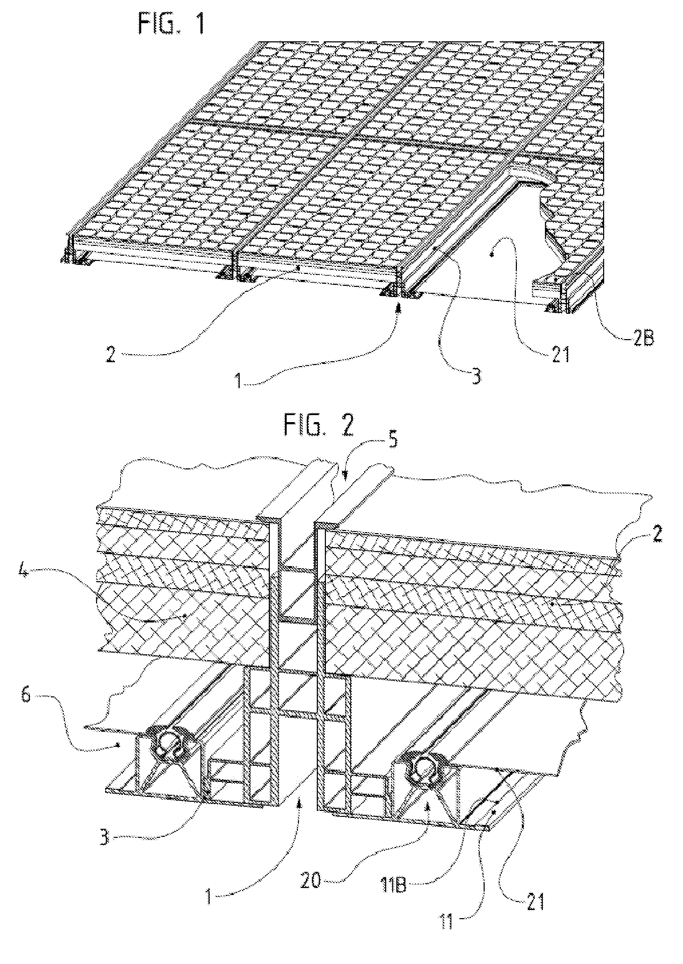

Fixé à la charpente de ladite toiture, un tel dispositif 1 reçoit au moins un panneau 2, de préférence plusieurs, afin de les maintenir, formant ainsi une couverture de tout ou partie d'un toit, comme visible sur la figure 1.

On notera que le panneau de couverture 2 se présente préférentiellement sous la forme d'au moins une plaque constituée de tout type de matériau, tel que composite, verre, particules, etc. Selon le mode préférentiel de réalisation, il s'agit d'un panneau 2 de captation solaire, notamment constitué de cellules photovoltaïques 2B.

Plus particulièrement, le dispositif 1 selon l'invention est constitué d'au moins un rail 3. Ce dernier peut être constitué en tout type de matériau, de préférence en métal. Le matériau peut être avantageusement choisi pour ses caractéristiques de résistance, de légèreté, de non oxydation, tel de l'aluminium ou un acier inoxydable. De plus, ce rail 3 est conformé de manière à être réalisé par filage, sans aucun usinage.

Un tel rail 3 est pourvu en partie haute 4 de moyens 5 supports dudit panneau 2. En partie basse 6, il comprend des moyens de fixation 7 à au moins un élément 8 de ladite toiture.

A ce propos, un avantage du dispositif 1 selon l'invention réside dans le fait qu'il se fixe directement sur un élément 8 de toiture, de préférence sur un chevron ou un plateau mais aussi sur un liteau, contre-latte, cornière ou autre.

Plus particulièrement, ces moyens de fixation 6 se présentent sous la forme d'au moins une aile 11 latérale s'étendant sur tout ou partie de la longueur dudit rail 3.

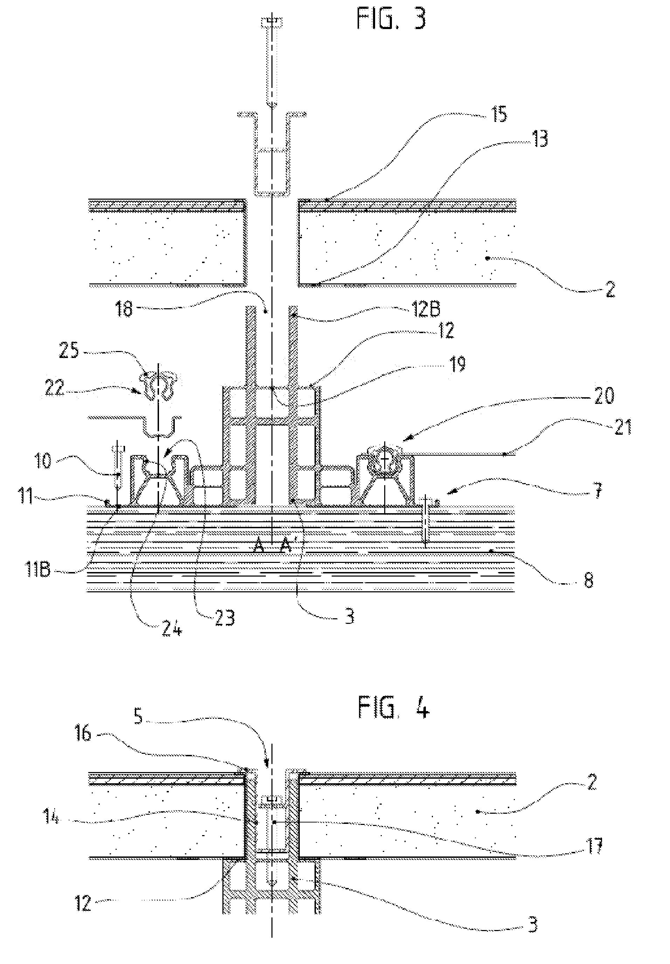

Plus particulièrement, selon le mode de réalisation préférentiel visible sur les figures 2 et 3, les moyens de fixation 6 comprennent deux ailes 11 disposée latéralement et symétriquement en partie basse 6 de part et d'autre dudit rail 3.

Cette aile latérale 11 comporte des moyens de centrage d'un élément fixant 10, telle une vis, une vis auto foreuse, un clou ou analogue. De préférence, il s'agit d'une vis apte à perforer le matériau constituant ledit rail 3, de type vis auto-foreuse. Lesdits moyens de centrage peuvent se présenter sous la forme d'au moins une rainure 11B centrée longitudinalement à ladite aile 11.

En partie haute 4, le dispositif 1 selon l'invention comprend des moyens 5 supportant au moins un panneau de couverture 2. Ces moyens supports 5 comprennent, d'une part, une surface 12 de réception d'un bord inférieure 13 d'un panneau 2 et, d'autre part, de moyens 14 de solidarisation du bord supérieur 15 dudit panneau 2.

La surface de réception 12 soutien le panneau 2 par en-dessous, tandis qu'un flanc 12B empêche le panneau 2 de glisser latéralement. De préférence, ce flanc 12B s'étend sur tout ou partie de l'épaisseur du panneau 2.

D'autre part, lesdits moyens de solidarisation 14 peuvent avantageusement se présenter sous la forme d'une pate 16 venant en recouvrement dudit bord supérieure 15. Cette pate 16 peut s'étendre sur toute ou partie de la longueur du rail 3.

Selon le mode de réalisation visible sur les figures 2 et 3, les moyens de solidarisation 14 sont conformés symétriquement par rapport à un axe vertical A-A', de manière à autoriser le blocage de deux panneaux 2 maintenus de part et d'autre du dispositif 1. Lesdits moyens de blocage comprennent donc deux pates 16 symétriques l'une par rapport à l'autre selon ledit axe A-A'.

Dans cette configuration, le rail 3 comprend lui aussi deux flancs 12B symétriques par rapport à l'axe A-A', formant une goulotte 18. Par conséquent, les moyens de solidarisation 14 peuvent prendre une forme complémentaire de manière à coopérer par emboîtement au sein de ladite goulotte 18.

De plus, lesdits moyens de solidarisation 14 comprennent des moyens de fixation audit rail 3, par au moins une vis auto foreuse 17, traversant les moyens de solidarisation 14 et venant coopérer par vissage avec le fond 19 de ladite goulotte 18, de préférence de manière centrée par rapport à cette dernière.

On notera que cette fixation particulière permet d'adapter le blocage du panneau 2 en fonction de son épaisseur. Le dispositif selon l'invention peut donc s'adapter à tout type de panneau 2 d'épaisseurs et de dimensions différentes.

Une autre caractéristique essentielle de l'invention réside dans le fait que ledit rail 3 comprend des moyens 20 de blocage de moyens de protection de ladite toiture, notamment d'un film 21.

Ce film 21 se présente comme une couche de protection constituée d'un matériau ayant des caractéristiques d'étanchéité, d'isolation phonique et/ou thermique ou toute autre caractéristique. Ce film 21 peut en fonction des textures et matériaux le constituant, laisser passer la vapeur d'eau générée par l'habitation. De préférence, ce film 21 est souple ou semi-ridige.

Le choix de cette protection étanche et perméable à la vapeur facilite grandement la réalisation de l'écran de sous-toiture, notamment lors de l'étape de découpage des bandes. Sa matière souple et son faible volume permettent une découpe simple et un transport aisé par rapport à d'autres solutions de protection rigides de type plaque en matière plastique, tôle en acier ou analogue qui sont plus contraignantes lors de la découpe, de la manutention et de la prise au vent. Son stockage est aussi facilité sous la forme de bobines ou analogue.

Un tel film 21 doit être situé au-dessus de la toiture, en particulier supérieurement aux éléments de toiture 8. Pour ce faire, le blocage dudit film 21, par rapport audit rail 3, se situe supérieurement auxdits moyens de fixation 7 de sorte que ces derniers soient couverts par ledit film 21. Lesdits moyens de blocage 20 viennent donc maintenir une extrémité du film 21, mettant en tension ce dernier.

Lesdits moyens de blocage 20 comprennent au moins une partie mâle 22 apte à coopérer avec au moins une partie femelle 23 de forme complémentaire. Ces parties mâle 22 et femelle 23 viennent coopérer par emboîtement de manière à bloquer l'extrémité dudit film 21 étant bloquée entre chacune d'entre elle. Ainsi pincé, le film est solidarisé dudit rail 3.

De plus, l'emboîtement des parties mâle 22 et femelle 23 peut s'effectuer en force. Il est alors nécessaire d'introduire la partie mâle 22 en la comprimant. C'est pourquoi cette dernière est avantageusement prévue dans un matériau à mémoire de forme. Plus particulièrement, la partie mâle 22 se déforme sous l'effet de la contrainte lors de son enfoncement dans la partie femelle 23 et reprend sa forme initiale après emboîtement.

Selon le mode préférentiel de réalisation, visible sur les figures 3 et 4, la partie femelle 23 se présente sous la forme d'une gorge s'étendant longitudinalement par rapport audit rail 3. Cette gorge s'étend sur toute ou partie de la longueur du rail 3.

Au niveau de son ouverture, en partie supérieur, cette gorge comprend des lèvres 24 sous la forme d'au moins bourrelet. Ces lèvres 24 servent de blocage de la partie mâle 22 après emboîtement. En effet, la partie mâle 22 se déforme au passage de ces lèvres 24 pour s'expanser, du fait de son élasticité, une fois inséré dans la partie femme 23. Lesdites lèvres 24 jouent alors un rôle de butée, empêchant ladite partie mâle 22 de s'extraire de ladite gorge.

Plus particulièrement, ladite partie mâle 22 peut se présenter sous la forme d'une baguette à mémoire de forme. Cette baguette peut avantageusement comprendre au moins une aile 25, de préférence deux située de par et d'autre de son axe longitudinal. Chaque aile 25 est prévue élastique, au travers de son matériau la constituant, par articulation ou, comme sur le mode de réalisation visible sur les figures, au moyen d'une forme particulière l'autorisant à se déformer lors de l'emboîtement dans la partie femelle 23 et à reprendre sa forme initiale après emboîtement.

En effet, ladite baguette est prévue creuse selon une forme de pince. Ses bords latéraux peuvent alors se rapprocher, permettant de passer lesdites lèvres 24. La partie inférieure correspond en forme avec ladite gorge tandis qu'une partie supérieure déborde en dehors de cette gorge pour en recouvrir entièrement l'ouverture.

Outre le maintien du film 21, cette configuration offre une étanchéité parfaite au niveau de la fixation dudit film 21, tout en facilitant considérablement sa pose.

Le dispositif 1 selon l'invention peut être d'un seul rail 3 ou d'une juxtaposition longitudinale de plusieurs rails 3, un film 21 pouvant être maintenu sur un de ses côtés par plusieurs rails 3 différents mis bout à bout.

Un même rail 3 peut aussi être prévu symétrique selon son axe longitudinal, de manière à ménager des moyens de blocage 20 de par et d'autre.

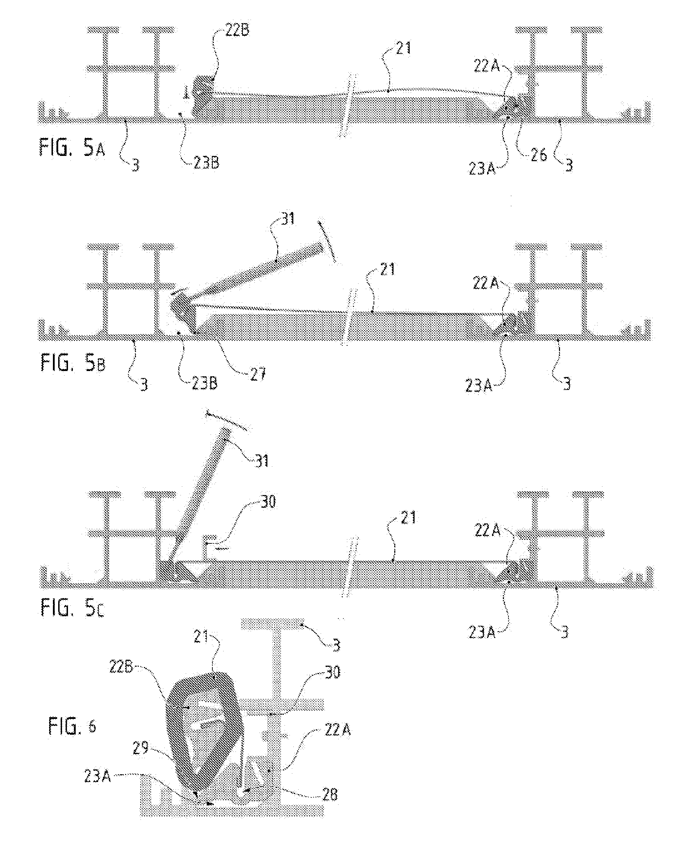

Selon un autre mode préférentiel de réalisation, le blocage dudit film 21 par emboîtement des parties mâle 22 et femelle 23 s'effectue différemment, comme visible sur les figures 5A à 5C.

Pour ce faire, tout d'abord, ladite partie mâle (22) comprend des moyens de blocage 26 de l'extrémité repliée dudit film 21. Ces moyens de blocage 26 se présentent sous la forme d'une gorge 28 pourvue d'un retour s'étendant depuis l'ouverture de ladite gorge vers l'intérieur de cette dernière. Ce retour forme une fente parallèle à l'une parois intérieures de la gorge 28.

Cette fente permet l'insertion de l'extrémité repliée dudit film 21, la pliure de ce dernier venant se caler contre le bord d'ouverture de ladite fente. Ainsi, la tension dudit film 21 assure le blocage de ce dernier à l'intérieur de la partie mâle 22.

De plus, dans ce mode de réalisation les parties mâle 22 et femelle 23 comprennent des moyens de pivotement 27 l'une par rapport à l'autre. Plus particulièrement, ces moyens de pivotement 27 peuvent se présenter sous la forme d'un ergot 29 coopérant avec un logement de forme complémentaire ménagé au niveau de la partie mâle 22. Ledit ergot 29 et le logement correspondant présentent une forme circulaire ou arrondie de manière à permettre l'emboîtement par rotation de ladite partie mâle 22 par rapport à ladite partie femelle 23.

A ce titre, l'extrémité de la partie mâle 22 opposée audit logement présente une arête en biseautée afin d'autoriser son insertion au sein de la partie femelle 23.

Après insertion par pivotement, ladite partie femelle 23 comprend des moyens 30 de maintien de ladite partie mâle 22 en emboîtement.

Ces moyens de maintien 30 peuvent se présenter sous la forme d'une platine d'une largeur équivalente à la hauteur entre le chant supérieur de la partie mâle 22 et le rail 3. Cette platine vient s'insérer de manière à empêcher le pivotement inverse de la partie mâle 22 après emboîtement.

On notera que cette platine peut être fixée par tout moyen, en particulier par vissage sur le rail 3.

Comme visible sur la figure 6, une extrémité du film 21 est bloquée au niveau d'une première partie mâle 22A tandis que l'extrémité opposée est bloquée au sein d'une seconde partie mâle 22B. Chacune des parties mâles 22A et 22B est destinée à coopérer respectivement avec des parties femelles 23A et 23B. Lors de la pose, le film 21 est enroulé autour de la partie mâle 22B, facilitant son transport.

On notera que la longueur du film 21 est prévue par rapport à l'espacement entre deux dispositifs 1. Une variation de la longueur de film 21 permet donc d'adapter la largeur entre deux rails 3.

Les figures 5A à 5C montrent les différentes étapes de la pose d'un film 21 au moyen de dispositifs 1 selon l'invention.

Tout d'abord, une première partie mâle 22A est emboîtement par pivotement au sein d'une première partie femelle 23A, puis maintenue au travers de la platine des moyens 30.

Le film 21 est ensuite déroulé de sorte que le logement des moyens de pivotement 27 de la seconde partie mâle 22B viennent coopérer avec l'ergot de la seconde partie femelle 23B. La rotation des desdites parties 22B et 23B permet de tendre le film 21. Une fois emboîtées, une platine des moyens de maintien 30 vient maintenir en place la partie mâle 22B.

Comme visible sur les figures, la rotation peut être facilité au travers d'un bras de levier 31 coopérant avec un espace complémentaire ménagé au sein de la partie mâle 22B.

L'invention a aussi pour objet une toiture comprenant une charpente et, fixé sur un au moins un élément (8) de ladite charpente, au moins un dispositif (1) selon des modes de réalisation précédemment évoqué et servant de support à au moins un panneau (2) de couverture de toit. De manière particulière, ladite toiture comprend au moins deux dispositifs (1) dont l'emboîtement respectif des parties mâles (22) et femelle (23) assure la tension dudit film (21).

La présente invention permet donc de faciliter et d'améliorer la pose de panneaux 2 de couverture de toiture au travers d'un dispositif support 1 offrant une étanchéité parfaite au travers d'un maintien du film 21 de protection.

Bien entendu, l'invention n'est pas limitée aux exemples décrits précédemment qui peuvent présenter des variantes et modifications sans pour autant sortir du cadre de l'invention.

## Revendications

1. Dispositif (1) support d'au moins un panneau (2) de couverture de toiture, constitué d'au moins un rail (3) pourvu en partie haute (4) de moyens (5) supports dudit panneau (2) et en partie basse (6) de moyens (7) de fixation à au moins un élément (8) de ladite toiture, ledit rail (3) comprenant encore des moyens (20) de blocage d'un film (21) de protection de ladite toiture, lesdits moyens de blocage (20) se situant supérieurement auxdits moyens de fixation (7) de sorte que ces derniers soient couverts par ledit film (21), **caractérisé par le fait que** lesdits moyens de blocage (20) comprennent au moins une partie mâle (22) de forme complémentaire avec au moins une partie femelle (23) de manière à coopérer par emboîtement, bloquant une extrémité dudit film (21).

2. Dispositif selon la revendication 1, **caractérisé par le fait que** lesdites parties mâle et femelle coopèrent par emboîtement en force, ladite partie femelle (23) se présentant sous la forme d'une gorge s'étendant longitudinalement par rapport audit rail (3) tandis que ladite partie mâle (22) se présente sous forme d'une baguette.

3. Dispositif (1) selon l'une quelconque des revendications 1 ou 2, **caractérisé par le fait que** ladite baguette est constituée d'un matériau à mémoire de forme, comprenant au moins une aile (25) élastique de manière à se déformer lors de l'emboîtement dans la partie femelle (23) et à reprendre sa forme initiale après emboîtement.

4. Dispositif (1) selon la revendication 1, **caractérisé par le fait que** ladite partie mâle (22) comprend des moyens de blocage (26) de l'extrémité repliée dudit film (21).

5. Dispositif (1) selon l'une quelconque des revendications 1 ou 4, **caractérisé par le fait que** ladite partie femelle (23) comprend des moyens de maintien de ladite partie mâle (22) en emboîtement.

6. Dispositif (1) selon la revendication 1, **caractérisé par le fait que** les parties mâle (22) et femelle (23) comprennent des moyens de pivotement l'une par rapport à l'autre de manière à permettre l'emboîtement par rotation de ladite partie mâle (22) par rapport à ladite partie femelle (23).

7. Toiture comprenant une charpente, **caractérisée par le fait qu'**elle comprend, fixé sur un au moins un élément (8) de ladite charpente au moins un dispositif (1) selon l'une quelconque des revendications précédentes et servant de support à au moins un panneau (2) de couverture de toit.

8. Toiture selon la revendication 6, **caractérisé par le fait qu'**elle comprend au moins deux dispositifs (1) dont l'emboîtement respectif des parties mâles (22) et femelle (23) assure la tension dudit film (21).
